# EUROPÄISCHE PATENTSCHRIFT

(11) **EP 0 594 982 B1**
(45) Veröffentlichungstag und Bekanntmachung des Hinweises auf die Patenterteilung: **27.11.1996**
(21) Anmeldenummer: 93114136.0
(22) Anmeldetag: 03.09.1993
(51) Int. Cl.: B29C 55/16

(54) **Spannkluppenverbund**
Fenter clip linkage
Liaison de pinces de rame

(30) Priorität: 24.10.1992 DE 4235994
(43) Veröffentlichungstag der Anmeldung: 04.05.1994
(73) Patentinhaber: LINDAUER DORNIER GESELLSCHAFT M.B.H, D-88129 Lindau (DE)
(72) Erfinder: Müller, Adolf, D-88138 Weissensberg (DE)

(56) Entgegenhaltungen:
- EP-A- 0 291 775
- EP-A- 0 480 253
- DE-B- 1 111 812
- US-A- 3 276 071
- PATENT ABSTRACTS OF JAPAN vol. 12, no. 64 (M-672)(2911) 26. Februar 1988 & JP-A-62 211 124 (TORAY IND. INC.)
- & JP-A-62 211 124 (TORAY IND. INC.)

## Beschreibung

Die Erfindung betrifft miteinander zu einer Kette zusammenfügbare Spannkluppenverbunde, insbesondere für Folienreckanlagen, gemäß dem Oberbegriff des Patentanspruchs 1.

Die Behandlung von Folienbahnen wird üblicherweise zum Zwecke eines Folienreckens oder auch in umgekehrtem Sinne für ein gesteuertes Folienschrumpfen durchgeführt, wofür eine Reihe von Vorrichtungen mit unterschiedlichem Aufbau bekannt geworden sind. Wesentlicher Grundgedanke bei all den Reckvorrichtungen ist, daß die Teilung zwischen den einzelnen Spannkluppen, die untereinander verbunden eine in Führungen endlos umlaufende Kluppenkette bilden, während eines Zeitintervalls der Folienbehandlung vergrößert und während eines anderen Zeitintervalls verringert werden muß.

Aus der europäischen Patentanmeldung Nr. 0 291 775 ist eine teilungsveränderliche Kluppenkette zur simultanen biaxialen Behandlung von Folienbahnen bekannt. Deren Aufgabe besteht darin, eine Behandlungsvorrichtung zu schaffen, die auf einfache und sichere Weise eine Abstandsänderung (Teilungsänderung) zwischen aufeinanderfolgenden Spannmitteln und damit eine Längsreckung, insbesondere aber eine gesteuerte Längsschrumpfung ermöglicht. Die Lösung der Aufgabe wird darin gesehen, daß Spannkluppen einer Kluppenkette untereinander durch ein erstes und ein zweites Kettenglied verbunden sind, und daß jedes Kettenglied mit seinem einen Ende drehbeweglich an einer von zwei festen Gelenkstellen des Kluppenkörpers angelenkt ist, und daß die Kettenglieder mit ihrem anderen Ende an einem gemeinsamen, achsparallel zu den festen Gelenkstellen im Kluppenkörper verlaufende Gelenkbolzen angelenkt sind und wenigstens eines der Kettenglieder als Winkelhebel ausgebildet ist, dessen Arm achsparallel zum vorgenannten Gelenkbolzen eine drehend gelagerte Laufrolle trägt, die mit einem Steuerteil in Wirkverbindung bringbar ist. Dieser Gelenkmechanismus ist so ausgebildet, daß hier eine horizontale Übertragung der Verstellkräfte von der Steuerschiene über den Gelenkmechanismus auf die Kluppenkörper erfolgt und der Gelenkmechanismus in jedem Falle neben der Übertragung der Stellkräfte die Kettenzugkraft aufnehmen muß.

Aus der US-PS 3,195,177 ist eine Vorrichtung zum Recken thermoplastischer Folienbahnen bekannt, nach der Spann- oder Haltemittel für den Rand der Folienbahn mit einem die Teilung zwischen den Spannmitteln beeinflussenden Gelenkmechanismus verbunden sind. Dieser Gelenkmechanismus ist als in vertikaler Ebene oder in horizontaler Ebene wirkender Kniehebel-Gelenkmechanismus ausgebildet. Bei z.B. der vertikalen Übertragung der Verstellkräfte auf die Spannmittel ist wenigstens eine untere und eine obere Führung erforderlich, in welcher die Lenker des Gelenkmechanismus in einem gemeinsamen Gelenkpunkt angelenkt und geführt werden.
Die Spannmittel selbst sind hier äußerst einfach aufgebaut dargestellt.
Derartige Spannmittel genügen nicht den an moderne Folienreckanlagen gestellten Forderungen; so ist z.B. ein sicheres Festklemmen der Folienränder über den Gesamtprozeß der Folienreckung, eine sichere und leichtgängige Führung der Spannkluppen und ein geringer Bauaufwand zur Teilungsänderung zwischen den Spannkluppen nicht gewährleistet. Ein kompakt ausgeführter Verstellmechanismus zur Teilungsänderung ist nicht vorgesehen, so daß eine feinfühlige Änderung der Teilung "T" im Sinne einer Abstandsreduzierung zwischen den Spannmitteln nicht erreichbar ist. Ebenso ist nicht vorgesehen, daß der als Kniehebel ausgebildete Verstellmechanismus wenigstens in der Phase, in der keine Verstellkräfte übertragen werden, von den Kettenzugkräften entlastet wird.

Aufgabe der Erfindung ist es daher, einen Spannkluppenverbund für eine Endlos-Kluppenkette anzugeben, wobei zwischen den Spannkluppen die Teilungsänderung unter Anwendung eines Gelenkmechanismus feinfühlig vorgenommen werden kann und die Kettenzugkraft dann nicht auf den Gelenkmechanismus wirksam wird, wenn der Gelenkmechanismus von den Verstellkräften entlastet ist; d.h., wenn sich der Gelenkmechanismus in gestreckter Lage befindet.

Gemäß der Erfindung wird die Aufgabe dadurch gelöst, daß Spannkluppen zu einem Paar bzw. einem Verbund von Spannkluppen zusammengefügt sind, und jede Spannkluppe auf achsparallel in der Einspannebene der Kluppe verlaufenden Führungen, die als Zugorgan für die Kluppenkörper des Spannkluppenverbundes wirken, relativ zueinander verschiebbar gelagert ist, und die Verschiebbarkeit jeder Kluppe des Kluppenverbundes von wenigstens einem Einfach-Kniehebel- oder Doppel-Kniehebelmechanismus ausgeht.
Die Lenker des Kniehebels sind zum einen mit einem Anlenkpunkt an der jeweiligen Spannkluppe verbunden und zum anderen mit dem zweiten Anlenkpunkt durch einen Gelenkbolzen verbunden, der zwischen den einen Spannkluppenverbund bildenden Spannkluppen positioniert ist. Dieser Gelenkbolzen trägt auf der dem Klemmteil der Spannkluppe abgewandten Seite eine drehend gelagerte Rolle, die mit einer Steuerschiene in Verbindung steht. Lage und Kontur der Steuerschiene in Bezug auf die Steuerrolle sind - wie an sich bekannt - bestimmend für das aufzubringende Schrumpfmaß bzw. die Teilungsänderung.
Die Verbindung des Kluppenverbundes zu einer Kluppenkette erfolgt in an sich bekannter Weise durch Kettenlaschen. Die Kettenlaschen greifen mit ihrem einen Ende im erfindungsgemäßen Kluppenverbund an einem an jedem Kluppenkörper im wesentlichen mittig angeordneten oberen und unteren mit dem Kluppenkörper verbundenen Zapfen oder an den Enden eines jeden Kluppenkörpers vertikal durchdringenden Bolzens an, der ebenfalls eine an seinen freien Enden drehend gelagerte Rolle aufnimmt, die hier zur Seitenstabilisierung der Spannkluppenpaare dient, und mit ihrem anderen Ende sind die Laschen an einem zwischen den Spannkluppenverbunden liegenden Kettenbolzen angelenkt.
Weitere ausgestaltende Merkmale der erfindungsgemäßen Lösung gehen aus den Unteransprüchen hervor.

Mit der erfindungsgemäßen Lösung ist der Vorteil verbunden, daß aufgrund der Kompaktheit des Spannkluppenverbundes und des kurzen Verstellweges vom Gelenkmechanismus zwischen den Kluppenkörpern die Teilung feinfühlig vorgenommen werden kann. Des weiteren sind durch die Ausbildung der Kluppenkörper-Führungen als Zugorgane die Gelenkstellen der Verstellmechanismen bei gestrecktem Kniehebel zugkraftentlastet, was sich positiv auf deren Lebensdauer auswirkt.

Die Erfindung wird nachstehend an einem Ausführungsbeispiel näher beschrieben. Im einzelnen zeigen die
- Fig. 1: den Spannkluppenverbund in Schnittdarstellung nach Linie B-B gem. Figur 2, eingebunden in eine Spannkluppenkette,
- Fig. 2: einen Schnitt durch den Kluppenkörper einer Spannkluppe nach Linie A-A in Figur 1 mit Klemmteil,
- Fig. 3: einen Teilschnitt des Spannkluppenverbundes nach Linie C-C in Figur 1.

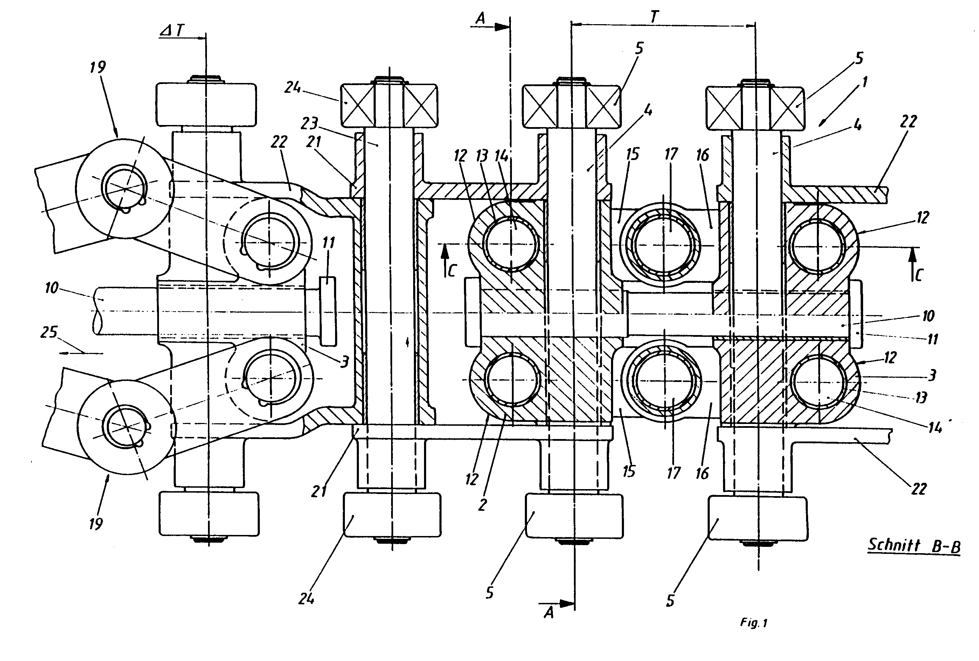

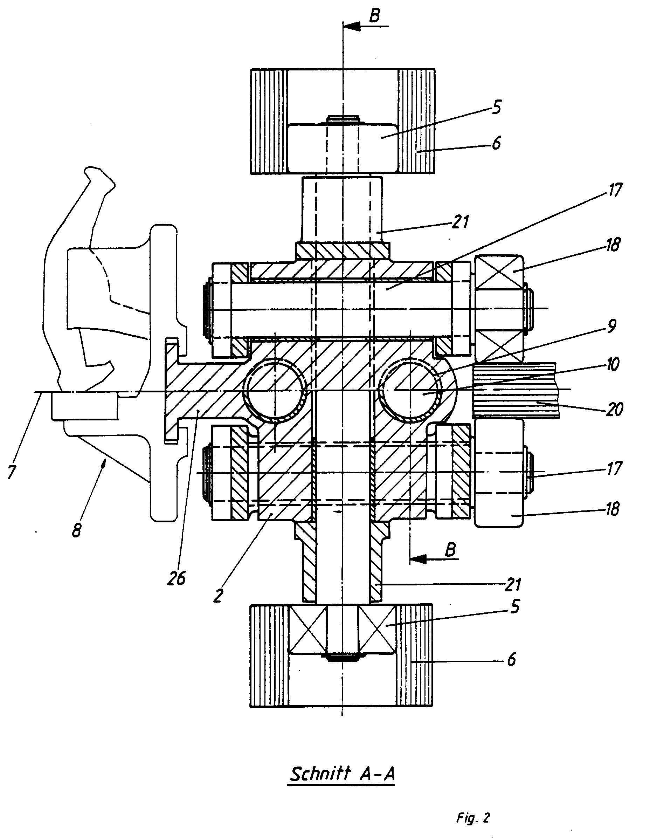

Die in eine Spannkluppenkette eingebundenen Spannkluppenverbunde 1 werden in Figur 1 gezeigt.
Jeder Spannkluppenverbund 1 besteht aus einem ersten Kluppenkörper 2 und einem zweiten Kluppenkörper 3. Jeder Kluppenkörper wird von einem Bolzen 4 etwa zentrisch soweit durchdrungen, daß an seinen freien Enden eine Laufrolle 5 drehend angeordnet werden kann. Auch eine Bolzenanordnung ist denkbar, die den Kluppenkörper 2,3 nicht durchdringt, sondern ebenfalls etwa zentrisch an der Unter- und Oberseite eines jeden Kluppenkörpers einen vergleichsweise kurzen Bolzen vorsieht.
Die Laufrollen 5 sind in bekannter Weise zwischen Führungen 6, siehe auch Figur 2, aufgenommen. Diese Führungen dienen der Seitenstabilisierung des Spannkluppenverbundes 1.
Wenigstens eine weitere Laufrolle je Kluppenkörper ist zur vertikalen Führung und gleichzeitig zur Abstützung des Kluppengewichtes vorgesehen. Diese Laufrolle ist hier nicht dargestellt; sie leistet auch keinen Beitrag zur Verdeutlichung der Erfindung.

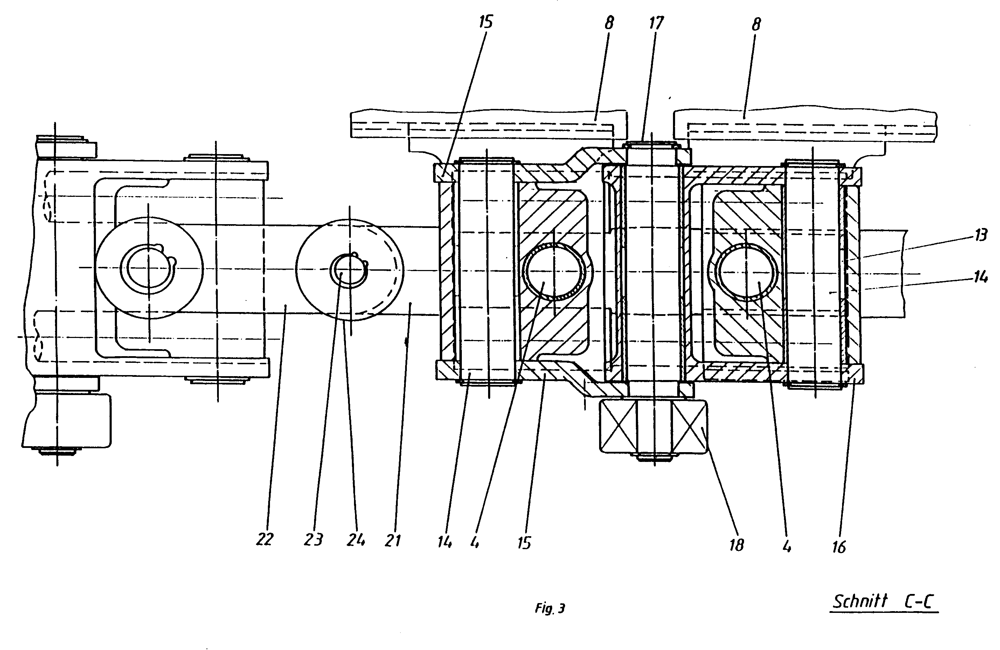

Jeder Kluppenkörper 2,3 ist mit vorzugsweise achsparallel zur Einspannebene 7 des Klemmteils 8 ausgerüsteten Durchgängen, im vorliegenden Falle Bohrungen 9 (Fig. 2) versehen, wovon jede ein einstückiges oder aus wenigstens zwei Teilen bestehendes Führungselement 10 aufnimmt.
Das jeweilige Führungselement 10 weist stirnseitig einen Mitnehmer 11 für den betreffenden Kluppenkörper auf. Die Führungselemente 10 ermöglichen, daß die Kluppenkörper 2,3 in einer Ebene geführt und relativ zueinander verschoben werden können. Die Kluppenkörper 2,3 sind ferner in ihren außen liegenden Eckbereichen mit Ohren 12 versehen, in die obere und untere Bohrungen 13 quer zu den Bohrungen 9 bzw. Führungselementen 10 verlaufen, und die Bohrungen 13 von einem drehbeweglich gelagerten Gelenkbolzen 14 durchgriffen sind. An jedem freien Ende des Gelenkbolzens 14 greift ein Lenker 15 bzw. eine einstückig ausgebildete Lenker-Gelenkbuchsen-Kombination 16 an.
Die Lenker 15 und die Lenker-Gelenkbuchsen-Kombination 16 sind mittig zwischen den Kluppenkörpern 2,3 an einem Gelenkbolzen 17, der an seinem dem Klemmteil 8 abgewandten freien Ende eine drehend angeordnete Steuerrolle 18 aufnimmt (Fig. 2 und 3), angelenkt.
Die Lenker 15 und die Lenker-Gelenkbuchsen-Kombination 16 bilden den in vertikaler Ebene betätigbaren Gelenk- oder Verstellmechanismus 19 für den Spannkluppenverbund 1.

Anstelle des in Figur 1 und 2 dargestellten Doppelgelenkmechanismus ist ein Einfachgelenkmechanismus einsetzbar.

Bei einem Doppelgelenkmechanismus liegt, wie Figur 2 zeigt, zwischen der oberen und der unteren Steuerrolle 18 die Steuerschiene 20. Ihre Ausdehnung in vertikaler Ebene ist ein Maß für den sich aus der Relativbewegung zwischen den Kluppenkörpern 2,3 des Spannkluppenverbundes 1 ergebenden Abstand und damit ein Maß für die von der Grundteilung "T" ausgehende Teilungsänderung "Δ T".
Wie Figur 1 weiter zeigt, ist jeder Spannkluppenverbund 1 mit äußeren und inneren Kettenlaschen 21,22 ausgerüstet. Die Kettenlaschen 21,22 greifen zum einen an jedem Bolzen 4 jedes Kluppenkörpers 2,3 eines Spannkluppenverbundes 1 an und sind zum anderen an einem Laufrollen 24 tragenden, drehbeweglich gelagerten Kettenbolzen 23, der zwischen jedem Spannkluppenverbund 1 liegt, angelenkt.

Figur 1 zeigt ferner einen halbseitigen Spannkluppenverbund 1, der nicht im Schnitt dargestellt ist. Hier ist der Gelenkmechanismus 19 ausgelenkt und der Kluppenkörper 3 in Kettenzugrichtung 25 relativ zum anderen Kluppenkörper auf den Führungen 10 verschoben. Daher liegt der rechtsseitige Mitnehmer 11 der Führung 10 nicht mehr am Kluppenkörper 3 an.

Wie in Figur 2 zu sehen, weist jeder Kluppenkörper 2,3 in der Einspann- oder Querebene 7 eine in Richtung des Randes der Folienbahn weisende Aufnahme 26 für das Klemmteil 8 auf. Das Klemmteil 8 selbst ist in Aufbau und Funktion bekannt. Auf weitere Ausführungen hierzu wird deshalb verzichtet.

Zu dem in Figur 3 gezeigten Spannkluppenverbund 1 erübrigen sich ebenfalls weitere Ausführungen, weil Aufbau und Funktion hierzu ohne weiteres aus den Figuren 1 und 2 ablesbar sind.

## Patentansprüche

1. Spannkluppenverbund, insbesondere für Folienreckanlagen, bestehend aus Kluppenkörper (2,3) mit vertikaler und horizontaler Rollenführung (6,20), aus einem mit jedem Kluppenkörper (2,3) verbundenen Klemmteil (8) zum Klemmen des Randes einer Folienbahn, aus Mitteln zur gelenkigen Verbindung von Kluppenverbunden (1) untereinander und zur Beeinflussung der Teilung "T" zwischen den Kluppenkörpern, wobei die Mittel aus wenigstens einem mit dem betreffenden Kluppenkörper (2,3) verbundenen Lenkern (15,16) eines mit den Kluppenkörpern (2,3) in Wirkverbindung stehenden Gelenkmechanismus (19) bestehen, **dadurch gekennzeichnet,** daß die Kluppenkörper (2,3) mit Klemmteil (8) des Spannkluppenverbundes (1) auf achsparallelen, in Kettenzugrichtung (25), vorzugsweise in der Einspannebene (7) der Klemmteile (8) verlaufenden Führungen (10) mit Mitnehmern (11) relativ zueinander verschiebbar angeordnet sind, wobei die Führungen (10) im unbelasteten Zustand des Gelenkmechanismus (19) Zugorgan für die Kluppenkörper (2,3) des Spannkluppenverbundes (1) sind und wobei jeder Spannkluppenverbund (1) einerseits durch Kettenlaschen (21,22) mit den Mitteln (4,5) zur horizontalen Rollenführung verbunden ist und andererseits die Kettenlaschen (21,22) an einem Bolzen (23), der zwischen den Spannkluppenverbunden (1) vorgesehen ist, angelenkt sind.

2. Spannkluppenverbund nach Anspruch 1, **dadurch gekennzeichnet,** daß der Gelenkmechanismus (19) wahlweise ein Einfach- oder Doppelkniehebel ist

3. Spannkluppenverbund nach Anspruch 1, **dadurch gekennzeichnet,** daß die Lenker (15,16) des Gelenkmechanismus (19) zum einen beidseitig, in Zugrichtung (25) der Kluppenkörper (2,3) gesehen, an einem oberhalb und/oder unterhalb der Einspannebene (7) liegenden Anlenkpunkt (14) am Kluppenkörper angreifen und zum anderen an einem zwischen den Kluppenkörpern (2,3) liegenden und eine Steuerrolle (18) tragenden auslenkbaren Gelenkbolzen (17) angelenkt sind.

4. Spannkluppenverbund nach Anspruch 1, **dadurch gekennzeichnet,** daß die Führungen (10) vorzugsweise einstückig ausgebildet sind.

5. Spannkluppenverbund nach Anspruch 1, **dadurch gekennzeichnet,** daß Mitnehmer (11) an den freien Enden der Führungen (10) angeordnet sind.

6. Spannkluppenverbund nach Anspruch 3, **dadurch gekennzeichnet,** daß jeder Gelenkbolzen (17) der Gelenkmechanismen (19) mit einer Steuerrolle (18) ausgerüstet ist.

7. Spannkluppenverbund nach Anspruch 1 und 6, **dadurch gekennzeichnet,** daß die Steuerrollen (18) an einer gemeinsamen die Teilung "T" beeinflussenden Steuerschiene (20) anliegen.

8. Spannkluppenverbund nach Anspruch 7, **dadurch gekennzeichnet,** daß die Steuerrolle (18) auf dem freien Ende der dem Klemmteil abgewandten Seite des Gelenkbolzens (17) angeordnet ist.

9. Spannkluppenverbund nach Anpsruch 8, **dadurch gekennzeichnet,** daß der Querschnitt der Steuerschiene (20) veränderlich ist.

## Claims

1. Tensioning-clip interlocking system particularly for film stretching installations, consisting of clip bodies (2, 3) with vertical and horizontal roller guiding (6, 20), of a clamp element (8) connected to each clip body (2, 3) for clamping the edge of a film, and of means for the articulated interconnection of clip interlocking systems (1) and for influencing the spacing "T" between the clip bodies, in which the means consist of at least one arm (15, 16), connected to the clip body in question, of an articulation mechanism (19) operatively connected to the clip bodies (2, 3) **characterized in that** the clip bodies (2, 3) with the clamp element (8) of the tensioning-clip interlocking system (1) are arranged so as to be movable relative to one another on axially parallel guides (10) having drivers (11) and extending in the direction (25) of the pull in the chain, preferably in the clamping plane (7) of the clamp elements (8), the guides (10) being pulling members for the clip bodies (2, 3) of the tensioning-clip interlocking system (1) when the articulation mechanism is in the unloaded condition and, on the one hand, each tensioning-clip interlocking system (1) being connected by chain links (21, 22) to the horizontal roller guiding means (4, 5) and, on the other hand, the chain links (21, 22) being coupled to a pin (23) which is provided between the tensioning-clip interlocking systems (1).

2. Tensioning-clip interlocking system according to claim 1, **characterized in that** the articulation mechanism (19) is alternatively a single or a double toggle lever.

3. Tensioning-clip interlocking system according to claim 1, **characterized in that** the arms (15, 16) of the articulation mechanism (19), on the one hand, engage the clip bodies at both ends, viewed in the direction of pulling (25) of the clip bodies (2, 3), at a coupling point (14) disposed above and/or below the clamping plane (7) and, on the other hand, are coupled to a deflectable pivot pin (17) disposed between the clip bodies (2, 3) and carrying a control roller (18).

4. Tensioning-clip interlocking system according to claim 1, **characterized in that** the guides (10) are preferably formed in one piece.

5. Tensioning-clip interlocking system according to claim 1, **characterized in that** the drivers (11) are disposed on the free ends of the guides (10).

6. Tensioning-clip interlocking system according to claim 3, **characterized in that** each pivot pin (17) of the articulation mechanism (19) is equipped with a control roller (18).

7. Tensioning-clip interlocking system according to claims 1 and 6, **characterized in that** the control rollers (18) are in contact with a common guide rail (20) influencing the spacing "T".

8. Tensioning-clip interlocking system according to claim 7, **characterized in that** the control roller (18) is disposed on the free end of the pivot pin (17) at the end facing away from the clamp element.

9. Tensioning-clip interlocking system according to claim 8, **characterized in that** the cross-section of the guide rail (20) is variable.

## Revendications

1. Solidarisation pour pinces de serrage, en particulier pour installations d'étirage de feuilles, comprenant des corps de pinces (2, 3) à guidages vertical et horizontal par rouleaux (6, 20) ; une pièce de coincement (8), reliée à chaque corps de pince (2, 3) pour coincer le bord d'une nappe de feuille ; et des moyens pour assurer la liaison mutuelle articulée d'assemblages de pinces (1) et pour influencer l'espacement "T" entre les corps de pinces, les moyens consistant en au moins une biellette (15, 16), reliée au corps de pince (2, 3) considéré, d'un mécanisme d'articulation (19) en liaison efficace avec les corps de pinces (2, 3), caractérisée par le fait que les corps de pinces (2, 3) sont agencés à coulissement relatif, avec la pièce de coincement (8) de l'assemblage (1) de pinces de serrage, sur des guides (10) à parallélisme axial, pourvus d'organes d'entraînement (11) et s'étendant dans la direction (25) de traction de la chaîne, de préférence dans le plan d'enserrement (7) des pièces de coincement (8), les guides (10) remplissant, à l'état soulagé du mécanisme d'articulation (19), la fonction d'un organe de traction pour les corps de pinces (2, 3) de l'assemblage (1) de pinces de serrage, et chaque assemblage (1) de pinces de serrage étant d'une part relié, par l'intermédiaire de chaînons (21, 22), aux moyens (4, 5) de guidage horizontal par rouleaux, et les chaînons (21, 22) étant d'autre part articulés sur un boulon (23) prévu entre les assemblages (1) de pinces de serrage.

2. Solidarisation pour pinces de serrage, selon la revendication 1, caractérisée par le fait que le mécanisme d'articulation (19) est, sélectivement, une genouillère simple ou double.

3. Solidarisation pour pinces de serrage, selon la revendication 1, caractérisée par le fait que les biellettes (15, 16) du mécanisme d'articulation (19) viennent d'une part en prise des deux côtés, observées dans la direction de traction (25) des corps de pinces (2, 3), avec un point (14) d'articulation sur le corps de pince, situé au-dessus et/ou au-dessous du plan d'enserrement (7), et sont d'autre part articulées sur un tourillon d'articulation (17) pouvant être dévié, interposé entre les corps de pinces (2, 3) et portant un galet de commande (18).

4. Solidarisation pour pinces de serrage, selon la revendication 1, caractérisée par le fait que les guides (10) sont préférentiellement réalisés d'une seule pièce.

5. Solidarisation pour pinces de serrage, selon la revendication 1, caractérisée par le fait que des organes d'entraînement (11) sont disposés aux extrémités libres des guides (10).

6. Solidarisation pour pinces de serrage, selon la revendication 3, caractérisée par le fait que chaque tourillon d'articulation (17) des mécanismes d'articulation (19) est équipé d'un galet de commande (18).

7. Solidarisation pour pinces de serrage, selon les revendications 1 et 6, caractérisée par le fait que les galets de commande (18) sont appliqués contre une glissière commune de commande (20), influençant l'espacement "T".

8. Solidarisation pour pinces de serrage, selon la revendication 7, caractérisée par le fait que le galet de commande (18) est disposé sur l'extrémité libre du côté du tourillon d'articulation (17) qui est tourné à l'opposé de la pièce de coincement.

9. Solidarisation pour pinces de serrage, selon la revendication 8, caractérisée par le fait que la section transversale de la glissière de commande (20) est variable.
